# EUROPÄISCHE PATENTANMELDUNG

(11) **EP 1 172 567 A1**
(43) Veröffentlichungstag der Anmeldung: **16.01.2002**
(21) Anmeldenummer: 01115049.7
(22) Anmeldetag: 21.06.2001
(51) Int. Cl.: F15B 15/10, F16L 33/22

(54) **Durch Fluidbeaufschlagung aktivierbare Betätigungseinrichtung**

(30) Priorität: 14.07.2000 DE 10034389
(71) Anmelder: Festo AG & Co, 73734 Esslingen (DE)
(72) Erfinder: Brenner, Hans-Walter, 70565 Stuttgart (DE); Zoller, Klaus, 70186 Stuttgart (DE); Sauer, Josef, 73249 Wernau (DE); Lorenz, Bernd, 73666 Baltmannsweiler (DE)
(74) Vertreter: Abel, Martin, Dipl.-Ing.

(57) **Zusammenfassung**

Es wird eine durch Fluidbeaufschlagung aktivierbare Betätigungseinrichtung (1) vorgeschlagen, die einen an zwei Kopfstücken (2, 3) festgelegten Kontraktionsschlauch (4) aufweist. Zur Übertragung der entstehenden Zugkräfte ist der Kontraktionsschlauch (4) zwischen zwei Klemmeinheiten (22, 23) des jeweiligen Kopfstückes (2, 3) eingespannt. Diese Klemmeinheiten (22, 23) sind derart in Längsrichtung (9) des Kontraktionsschlauches (4) relativ zueinander beweglich ausgeführt und es greift ferner der Kontraktionsschlauch (4) derart an einer der Klemmeinheiten (23) an, dass diese bei Aktivierung der Betätigungseinrichtung relativ zur anderen Klemmeinheit (22) mitgezogen wird, so dass sich die Spaltbreite eines zwischen den beiden Klemmeinheiten (22, 23) definierten Klemmspaltes (26) verringert, in dem der Kontraktionsschlauch (4) gehalten ist.

## Beschreibung

Die Erfindung betrifft eine durch Fluidbeaufschlagung aktivierbare Betätigungseinrichtung, mit einem sich zwischen zwei Kopfstücken erstreckenden Kontraktionsschlauch, der bei Fluidbeaufschlagung seines Schlauch-Innenraumes im Sinne einer radialen Aufweitung beaufschlagt wird und dabei gleichzeitig im Sinne einer gegenseitigen Annäherung wirkende axiale Zugkräfte auf die Kopfstücke ausübt, wobei der Kontraktionsschlauch an mindestens einem Kopfstück dadurch befestigt ist, dass er mit seinem betreffenden Endabschnitt in einem ringförmigen Klemmspalt eingespannt ist, der zwischen bezüglich der Längsachse des Kontraktionsschlauches zumindest partiell geneigt verlaufenden Spannflächen einer mit zum externen Kraftabgriff dienenden Kraftabgriffsmitteln ausgestatteten ersten Klemmeinheit und einer zweiten Klemmeinheit des Kopfstückes definiert ist, wobei eine der Klemmeinheiten in den Kontraktionsschlauch eingreift und die andere Klemmeinheit den Kontraktionsschlauch außen umgreift.

Eine derartige Betätigungseinrichtung geht beispielsweise aus dem deutschen Gebrauchsmuster Nr. 299 06 626 hervor. Sie verfügt dort über einen Kontraktionsschlauch, der sich aus einem gummielastischen Schlauchkörper und einer koaxial zu diesem angeordneten Strangstruktur zusammensetzt, und der stirnseitig unter Abdichtung an zwei Kopfstücken befestigt ist. Die Kopfstücke sind hierzu mit zwei Klemmeinheiten ausgestattet, die nach Art einer Überwurfmutter miteinander verschraubt sind, wobei sie einen ringförmigen Klemmspalt definieren, in dem der Kontraktionsschlauch mit dem zugeordneten Endbereich eingespannt ist. Eine erste der Klemmeinheiten eines jeweiligen Kopfstückes, die hier ins Innere des Kontraktionsschlauches eingreift, ist mit geeigneten Kraftabgriffsmitteln ausgestattet, beispielsweise in Gestalt eines Gewindes, über die ein externer Kraftabgriff erfolgen kann. Wird der Schlauch-Innenraum mit unter einem gewissen Betätigungsdruck stehendem Druckmedium gefüllt, führt dies zu einer radialen Beaufschlagung des Kontraktionsschlauches mit daraus resultierender axialer Kontraktionstendenz, so dass Zugkräfte auf die Kopfstücke ausgeübt werden, die diese im Sinne einer gegenseitigen Annäherung beaufschlagen. Auf diese Weise können externe Strukturen bzw. Bauteile miteinander verspannt werden, die an den Kraftabgriffsmitteln der Kopfstücke fixiert sind.

Die Klemmverbindung zwischen dem Kontraktionsschlauch und den Kopfstücken hat sich beim Auftreten hoher Zugkräfte als problematisch erwiesen. Obgleich die Spannfläche einer der Klemmeinheiten mit mehreren Vorsprüngen ausgestattet ist, die sich in das Material des Kontraktionsschlauches eindrücken können, besteht die Gefahr, dass der Kontraktionsschlauch auf Grund seines Verformungsvermögens bei Extrembelastungen aus dem Klemmspalt herausgezogen wird.

Es ist daher die Aufgabe der vorliegenden Erfindung, eine Betätigungseinrichtung der eingangs genannten Art zu schaffen, die auch beim Auftreten hoher Zugkräfte eine sichere Verbindung zwischen dem Kontraktionsschlauch und den Kopfstücken gewährleistet.

Zur Lösung dieser Aufgabe ist vorgesehen, dass die beiden Klemmeinheiten derart in Längsrichtung des Kontraktionsschlauches relativ zueinander beweglich ausgeführt sind und der Kontraktionsschlauch derart an der zweiten Klemmeinheit angreift, dass die zweite Klemmeinheit beim Aktivieren der Betätigungseinrichtung vom Kontraktionsschlauch relativ zu der über die Kraftabgriffsmittel extern fixierten ersten Klemmeinheit mitgezogen werden kann, woraus entlang zumindest eines Längenabschnittes des Klemmspaltes eine den Klemmeffekt unterstützende Verringerung der Breite des Klemmspaltes resultiert.

Auf diese Weise wird mit zunehmenden Zugkräften eine selbsttätige Verstärkung des Klemmeffektes zwischen dem betreffenden Kopfstück und dem eingespannten Endabschnitt des Kontraktionsschlauches herbeigeführt. Die vom axial kontrahierenden Kontraktionsschlauch erzeugten Zugkräfte werden zumindest partiell und beispielsweise reibungsbedingt auf die nicht mit Kraftabgriffsmitteln ausgestattete zweite Klemmeinheit übertragen, so dass diese relativ zu der über die Kraftabgriffsmittel extern fixierten ersten Klemmeinheit ein Stück weit verlagert wird, was auf Grund des geneigten Verlaufes der Spannflächen eine konzentrische Verringerung der Spaltbreite des Klemmspaltes hervorruft und dadurch die auf den Kontraktionsschlauch ausgeübten Klemmkräfte verstärkt. Dabei werden gleichzeitig durch die axiale Streckung des Kontraktionsschlauches resultierende Wandstärkenverringerungen des Kontraktionsschlauches ausgeglichen, so dass der Kontraktionsschlauch sowohl bei geringen als auch bei hohen Zugkräften sicher im betreffenden Kopfstück verankert bleibt.

Auf Grund des sich einstellenden selbsttätigen Klemmeffektes besteht die vorteilhafte Möglichkeit, die Spannflächen mit einem im Wesentlichen geradlinigen oder zumindest nur schwach gekrümmten Verlauf auszustatten und somit auf vorsprung- oder verzahnungsartige Erhebungen zu verzichten, die erfahrungsgemäß die Übertragung der Klemmkräfte auf lokal eng begrenzte Bereiche beschränken. Die axiale Länge der Spannflächen kann stark vergrößert werden, woraus eine gleichmäßige Klemmkrafteinleitung in die Wandung des Kontraktionsschlauches resultiert.

Vorteilhafte Weiterbildungen der Erfindung gehen aus den Unteransprüchen hervor.

Die an den beiden Klemmeinheiten vorgesehenen Spannflächen sind zweckmäßigerweise komplementär zueinander gestaltet. Dabei können sie zumindest partiell, also lediglich entlang eines Teils ihrer Länge, vorzugsweise aber über ihre gesamte Länge hinweg einen konischen Verlauf haben. Anstelle des konischen Verlaufes ist auch ein kugelzonenartiger Verlauf mit vorzugsweise großem Kugelradius möglich. Die Spannflächenverläufe können auch miteinander kombiniert werden.

Bei einer bevorzugten Ausführungsform verlaufen die Spannflächen innerhalb des Klemmspaltes derart geneigt zueinander, dass sich ihr Abstand von der Längsachse des Kontraktionsschlauches zu dem dem Kontraktionsschlauch axial entgegengesetzten äußeren Endbereich des Kopfstückes hin vergrößert. Dies bedeutet, dass der Ringdurchmesser des ringförmigen Kontraktionsspaltes zum äußeren Endbereich des Kopfstückes hin vorzugsweise allmählich zunimmt.

Bei einer anderen Ausführungsform ist die Längsrichtung des Klemmspaltes bezüglich der Längsachse des Kontraktionsschlauches entgegengesetzt geneigt, so dass sich der Durchmesser des Klemmspaltes zum äußeren Endbereich des Kopfstückes hin verringert.

Beide Maßnahmen können auch kombiniert werden, beispielsweise dahingehend, dass die Spannflächen innerhalb des Klemmspaltes einen Mittenbereich größten Abstandes zur Längsachse des Kontraktionsschlauches aufweisen, von dem aus sie sich zu entgegengesetzten Axialseiten hin an die Längsachse des Kontraktionsschlauches annähern. Der Durchmesser des Klemmspaltes hat also im Mittenbereich ein Maximum und verringert sich axial zu beiden Seiten hin. In diesem Falle ist es zweckmäßig, die äußere Klemmeinheit mehrteilig auszuführen und die an ihr vorgesehene äußere Spannfläche auf zwei beidseits des Mittenbereichs platzierte Klemmkörper aufzuteilen, die durch geeignete Spannmittel gegeneinandergezogen werden, um die bereits im deaktivierten Zustand der Betätigungseinrichtung vorhandene Klemmung des Kontraktionsschlauches zu bewirken.

Um eine optimale Zugkraftübertragung zwischen dem Kontraktionsschlauch und der zweiten Klemmeinheit zu erzielen, und zwar in Verbindung mit einer kostengünstigen, einfachen und kompakten Anordnung, empfiehlt es sich, zumindest die Spannfläche der zweiten Klemmeinheit, vorzugsweise aber beide Spanneinheiten, mit einer insbesondere durchweg feingliedrigen Oberflächenstruktur zu versehen. Dadurch werden die zwischen dem Kontraktionsschlauch und der zweiten Spanneinheit axial wirkenden Mitnahmekräfte großflächig erhöht, ohne den Kontraktionsschlauch lokal übermäßig zu beanspruchen. Die feingliedrige Oberflächenstruktur lässt sich beispielsweise als Rillenstruktur realisieren, oder durch eine spezielle Materialbeschichtung, beispielsweise durch Flammspritzen oder ein sonstiges Materialauftragsverfahren. Jedenfalls ist es von Vorteil, wenn über die an dem Kontraktionsschlauch angreifenden Spannflächen hinweg gleichmäßig verteilt feine Erhebungen und/oder Vertiefungen vorhanden sind, die den Kraftfluss verbessern.

Nachfolgend wird die Erfindung anhand der beiliegenden Zeichnung näher erläutert. In dieser zeigen:
- Figur 1: eine bevorzugte Ausführungsform der erfindungsgemäßen Betätigungseinrichtung, teilweise im Längsschnitt,
- Figur 2: eine Stirnansicht von außen her auf das in Figur 1 rechts liegende Kopfstück mit Blickrichtung gemäß Pfeil II aus Figur 1, und
- Figur 3: einen axialen Endbereich einer weiteren bevorzugten Ausführungsform der Betätigungseinrichtung, wiederum teilweise im Längsschnitt.

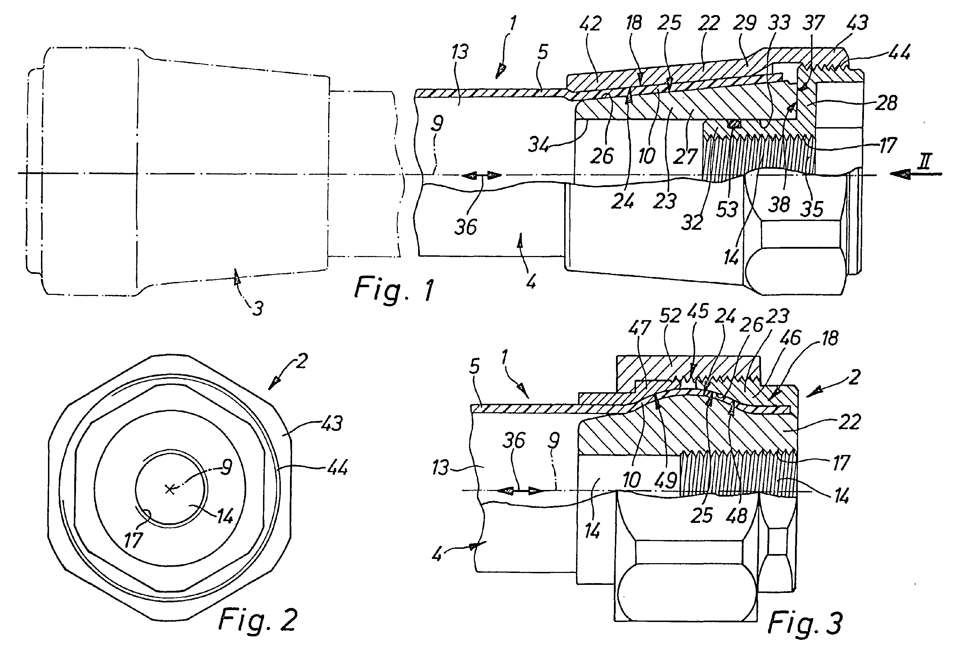

Die in der Zeichnung allgemein mit Bezugsziffer 1 bezeichnete Betätigungseinrichtung enthält zwei mit Abstand zueinander angeordnete erste und zweite Kopfstücke 2, 3, wobei in Figur 3 der Einfachheit halber nur eines der Kopfstücke 2 abgebildet ist. Die beiden Kopfstücke 2, 3 sind über einen sich linear erstreckenden Kontraktionsschlauch 4 fest miteinander verbunden, dessen Längsachse bei 9 angedeutet ist. Zumindest im deaktivierten Zustand der Betätigungseinrichtung 1 hat der Kontraktionsschlauch 4 eine hohlzylinderähnliche Gestalt.

Der Kontraktionsschlauch 4 verfügt zweckmäßigerweise über einen aus Material mit gummielastischen Eigenschaften bestehenden länglichen Schlauchkörper 5. Als Werkstoff wird vorzugsweise Gummi oder ein Elastomermaterial mit vergleichbaren Eigenschaften herangezogen. In das Material des Schlauchkörpers 5 ist eine in der Zeichnung nicht näher dargestellte Strangstruktur eingebettet, die vom Schlauchkörpermaterial zweckmäßigerweise vollständig umschlossen ist und die über eine zum Schlauchkörper 5 koaxiale Anordnung verfügt. Der strukturelle Aufbau des Kontraktionsschlauches 4 kann insbesondere dem in dem deutschen Gebrauchsmuster 299 06 626 beschriebenen entsprechen.

Der Kontraktionsschlauch 4 ist mit seinen beiden axialen Endabschnitten 10 derart am jeweils zugeordneten Kopfstück 2, 3 festgelegt, daß einerseits eine fluiddichte Verbindung zwischen dem Schlauchkörper 5 und dem betreffenden Kopfstück 2, 3 vorliegt, und andererseits die nicht näher dargestellte Strangstruktur in der Lage ist, Zugkräfte auf das jeweilige Kopfstück 2, 3 auszuüben. An Stelle der Strangstruktur können auch andere, zur Übertragung axialer Zugkräfte geeignete Maßnahmen getroffen sein.

Der Kontraktionsschlauch 4 begrenzt in seinem Innern einen Schlauch-Innenraum 13, der stirnseitig durch die beiden Kopfstücke 2, 3 abgeschlossen ist. In den Schlauch-Innenraum 13 mündet mindestens ein Fluidkanal 14, der beim Ausführungsbeispiel das erste Kopfstück 2 vorzugsweise koaxial durchsetzt und der mit einer nicht näher dargestellten Fluidleitung verbindbar ist, die zu einer Druckmittelquelle führt. Durch Verwendung einer zwischengeschalteten Steuerventilanordnung besteht somit die Möglichkeit, durch den Fluidkanal 14 hindurch ein fluidisches Druckmedium, beispielsweise Druckluft, in den Schlauch-Innenraum 13 einzuspeisen oder aus diesem abzuführen. Es versteht sich dabei, dass die Zufuhr und Abfuhr des Druckmediums auch über mehrere separate Fluidkanäle erfolgen kann, die bei Bedarf an beiden Kopfstücken 2, 3 vorgesehen sein können. Ferner kann der Fluidkanal auch ohne Weiteres an dem zweiten Kopfstück 3 ausgebildet sein.

Bevorzugt wird die Betätigungseinrichtung 1 mit gasförmigem Druckmedium, insbesondere Druckluft betrieben. Sie eignet sich jedoch ohne Weiteres auch für einen Betrieb mit einem hydraulischen Fluid, beispielsweise mit Öl oder Wasser.

Jedes Kopfstück 2, 3 ist an einer von außen her zugänglichen Stelle mit Kraftabgriffsmitteln 17 ausgestattet. Diese sind bei Ausführungsbeispiel von einem Gewindeabschnitt des betreffenden Kopfstückes 2, 3 gebildet und ermöglichen eine Befestigung des betreffenden Kopfstückes 2, 3 an einem nicht näher dargestellten Bauteil. Unter dem Begriff "Bauteil" sei hier jedwede Art von Gegenstand verstanden. Beispielsweise wäre es möglich, das erste Kopfstück mit seinen Kraftabgriffsmitteln 17 am Gestell einer Maschine zu fixieren und das andere Kopfstück mit einem relativ zum Maschinengestell zu bewegenden Maschinenteil zu verbinden. Jedenfalls ist bei einem bevorzugten Einsatzzweck vorgesehen, die Kraftabgriffsmittel 17 der beiden Kopfstücke 2, 3 an solchen Bauteilen anzubringen, die bei Bedarf mit einer bestimmten Kraft zueinander gezogen werden sollen.

Die Verbindung mit dem entsprechenden Bauteil kann unmittelbar über die Kraftabgriffsmittel 17 erfolgen. Alternativ hierzu sehen die Ausführungsbeispiele vor, dass an den Kraftabgriffsmitteln 17 ein nicht näher dargestelltes Adapterteil befestigt wird, das über eine an das zu befestigende Bauteil speziell angepasste Schnittstelle verfügt. Dieses Adapterteil enthält auch einen weiteren Fluidkanal, der bei installiertem Adapterteil mit dem Fluidkanal 14 in Verbindung steht, so dass das Adapterteil sowohl zur Kraftübertragung als auch zur Fluideinspeisung und -abführung verwendet werden kann.

Zur Aktivierung der Betätigungseinrichtung 1 wird in den Schlauch-Innenraum 13 über den Fluidkanal 14 hinweg ein unter einem vorgegebenen Betriebsdruck stehendes Druckmedium eingespeist. Auf Grund dieses Überdruckes wird die Wandung des Kontraktionsschlauches 4 von innen her radial nach außen gerichtet beaufschlagt, so dass eine Beaufschlagung im Sinne einer radialen Aufweitung des Kontraktionsschlauches 4 stattfindet. Dies hat zur Folge, dass der Kontraktionsschlauch 4 gleichzeitig im Sinne einer axialen Kontraktion beaufschlagt wird, wobei die vom Kontraktionsschlauch 4 hervorgerufenen axialen Zugkräfte in Sinne einer gegenseitigen Annäherung auf die Kopfstücke 2, 3 einwirken. Dies wiederum führt dazu, dass die an den Kraftabgriffsmitteln 17 der beiden Kopfstücke 2, 3 festgelegten Bauteile aufeinander zu gerichtet beaufschlagt werden. In Abhängigkeit von den Gegebenheiten geht dies einher mit einer mehr oder weniger starken axialen Annäherung der beiden Kopfstücke 2, 3, wobei die hier von den Kopfstücken 2, 3 relativ zueinander zurückgelegte Wegstrecke als Hub bezeichnet werden kann.

Zur Deaktivierung der Betätigungseinrichtung 1 wird das Druckmedium zumindest partiell aus dem Schlauch-Innenraum 13 abgelassen. Der Kontraktionsschlauch 4 streckt sich dann wieder in die Ausgangslage, wobei die Kopfstücke 2, 3 in die Ausgangsposition zurückkehren.

Das besondere Bewegungs- und Verformungsverhalten des Kontraktionsschlauches 4 wird beim Ausführungsbeispiel durch die integrierte Strangstruktur (nicht dargestellt) gewährleistet. Dieser Aufbau kann beispielsweise dem in dem deutschen Gebrauchsmuster 299 06 626 oder dem in der EP 0 161 750 B1 erläuterten entsprechen. Bevorzugt enthält die Strangstruktur eine Vielzahl sich zwischen den beiden Kopfstücken 2, 3 erstreckender biegeflexibler, gleichzeitig aber eine hohe Zugfestigkeit besitzender, ein- oder mehrfaseriger Stränge, wobei eine Bauform bevorzugt wird, bei der sich die Stränge schraubenwendelförmig in Richtung des Umfanges des Schlauchkörpers 5 zwischen den Kopfstücken 2, 3 erstrecken und insbesondere in einer Überkreuzkonfiguration angeordnet sind, so dass sich rautenähnliche Gitterbereiche bilden. Durch die Innendruckbeaufschlagung des Kontraktionsschlauches 4 wird eine Verschiebung der Rautenwinkel hervorgerufen, was letztlich dazu führt, dass sich an der Strangstruktur im Bereich der Endabschnitte 10 des Kontraktionsschlauches 4 axiale Zugkräfte einstellen, die auf die Kopfstücke 2, 3 übertragen werden.

Diese Kraftübertragung wird dadurch realisiert, dass der Kontraktionsschlauch 4 an seinen Endabschnitten 10 im jeweils zugeordneten Kopfstück 2, 3 fest eingespannt ist. Hierzu sind die Kopfstücke 2, 3 mit einer besonders vorteilhaften Klemmvorrichtung 18 ausgestattet, die bei beiden Kopfstücken zweckmäßigerweise identisch aufgebaut ist, so dass sich die Beschreibung auf die in der Zeichnung gezeigten ersten Kopfstücke 2 beschränken kann.

Die Klemmvorrichtung 18 ist unmittelbarer Bestandteil des betreffenden Kopfstückes 2, 3. Sie enthält eine erste Klemmeinheit 22, die mit den Kraftabgriffsmitteln 17 ausgestattet ist, und verfügt weiter über eine bezüglich der ersten Klemmeinheit 22 separat ausgebildete zweite Klemmeinheit 23, die keine Kraftabgriffsmittel 17 aufweist.

Die beiden Klemmeinheiten 22, 23 greifen koaxial ineinander ein, wobei eine an der ersten Klemmeinheit 22 vorgesehene erste Spannfläche 24 einer an der zweiten Klemmeinheit 23 vorgesehenen zweiten Spannfläche 25 radial gegenüberliegt. Die beiden Spannflächen 24, 25 sind dabei quer zur Längsachse 9 orientiert und einander zugewandt.

Die beiden Klemmeinheiten 22, 23 definieren zwischen den beiden Spannflächen 24, 25 einen ringförmigen Klemmspalt 26. Dieser ist zu der dem jeweils anderen Kopfstück zugewandten inneren Stirnseite des betreffenden Kopfstückes hin offen, wobei der Kontraktionsschlauch 4 von der offenen Seite her mit seinem Endabschnitt 10 konzentrisch in den Klemmspalt 26 eingeführt ist.

Bereits bei deaktivierter Betätigungseinrichtung 1 sind die Klemmeinheiten 22, 23 derart miteinander verspannt, dass sie die Wandung des zwischen ihnen liegenden Endabschnittes 10 mit einer Basis-Vorspannung klemmend beaufschlagen. Die Spannflächen 24, 25 liegen dabei zum einen an der Innenfläche und zum anderen an der Außenfläche des Schlauchkörpers 5 an.

Beim Ausführungsbeispiel der Figuren 1 und 2 wird der Endabschnitt 10 des Kontraktionsschlauches 4 von der ersten Klemmeinheit 22 außen umschlossen, während die zweite Klemmeinheit 23 von der Stirnseite her in den Kontraktionsschlauch 4 eintaucht. Die zweite Klemmeinheit 23 ist von einem Konuselement 27 gebildet, dessen die zweite Spannfläche 25 bildende Mantelfläche zumindest über eine Teillänge und vorzugsweise über die gesamte axiale Länge hinweg einen konischen Verlauf hat. Die erste Klemmeinheit 22 ist mehrteilig ausgeführt und besitzt einen mit den Kraftabgriffsmitteln 17 ausgestatteten Lagerungskörper 28 sowie einen mit diesem in Eingriff stehenden Klemmkörper 29. Der Lagerungskörper 28 greift mit einem sich axial erstreckenden zentralen Lagerungsfortsatz 32 in eine komplementär konturierte Lagerungsausnehmung 33 des Konuselementes 27 hinein, wobei die Lagerungsausnehmung 33 zweckmäßigerweise von einer das Konuselement 27 über seine gesamte Länge durchsetzenden Durchtrittsöffnung 34 gebildet ist. Auch der Lagerungskörper 28 verfügt über eine axiale Durchgangsbohrung 35, die zusammen mit dem sich an den Lagerungsfortsatz 32 anschließenden Längenabschnitt der Durchtrittsöffnung 34 den Fluidkanal 14 bildet.

Die beiden Klemmeinheiten 22, 23 sind in Längsrichtung des Kontraktionsschlauches 4 relativ zueinander beweglich ausgeführt, wobei die Bewegungsrichtung 36 durch einen Doppelpfeil verdeutlicht ist. Beim Ausführungsbeispiel der Figuren 1 und 2 liegt zwischen dem Konuselement 27 und dem Lagerungskörper 28 eine axiale Verschiebeführung vor. Dabei kann sich das Konuselement 27 bzw. die dieses bildende zweite Klemmeinheit 23 über eine axial orientierte, vom Kontraktionsschlauch 4 wegweisende erste Abstützfläche 37 an einer ihr zugewandten zweiten Abstützfläche 38 der ersten Klemmeinheit 22 abstützen. Die zweite Abstützfläche 38 ist dabei vorzugsweise an dem Lagerungskörper 28 vorgesehen.

Der Klemmkörper 29 hat einen hülsenähnlichen Aufbau mit einem die nach innen orientierte erste Spannfläche 24 definierenden Klemmabschnitt 42 und einem sich axial daran anschließenden Befestigungsabschnitt 43, der den Lagerungskörper 28 im Bereich eines flanschartig ausgebildeten Abschnittes außen übergreift. Dabei liegt zwischen dem Klemmkörper 29 und dem Lagerungskörper 28 eine Schraubverbindung 44 vor, die es ermöglicht, die axiale Relativposition zwischen den beiden Körpern zu variieren. An Stelle der Schraubverbindung 44 könnten auch andere gleichwirkende Spannmittel gewählt sein.

Die an dem Klemmkörper 29 vorgesehene erste Spannfläche 24 hat einen bezüglich der ihr zugewandten zweiten Spannfläche 25 komplementären, bezüglich der Längsachse 9 geneigten Verlauf. In beiden Fällen ist der Schrägverlauf so gewählt, dass sich der Abstand der jeweiligen Spannfläche 24, 25 zur Längsachse 9 des Kontraktionsschlauches 4 mit zunehmender Annäherung an den dem Kontraktionsschlauch 4 axial entgegengesetzten äußeren Endbereich des Kopfstückes 2 vergrößert. Der Durchmesser des ringförmigen Klemmspaltes 26 erweitert sich also ausgehend vom axial inneren Ende des Kopfstückes 2 nach axial außen hin.

Um die erwähnte Basis-Vorspannung zu erhalten, wird der Klemmkörper 29 nach axial außen hin auf den Lagerungskörper 28 aufgeschraubt, so dass die erste Spannfläche 24 auf die Außenfläche des Kontraktionsschlauches 4 einwirkt. Die Gegenkraft wird von der zweiten Spannfläche 25 des Konuselementes 27 geliefert, das sich über die Abstützflächen 37, 38 am Lagerungskörper 28 abstützt. Je weiter der Klemmkörper 29 auf den Lagerungskörper 28 aufgeschraubt wird, desto größer ist die Klemmung des im Klemmspalt 26 eingespannten Kontraktionsschlauches.

Beim Ausführungsbeispiel der Figur 3 greift die erste Klemmeinheit 22 in den Endabschnitt 10 des Kontraktionsschlauches 4 ein, während die zweite Klemmeinheit 23 auf gleicher axialer Höhe am Außenumfang des Kontraktionsschlauches 4 sitzt. Dementsprechend ist die erste Spannfläche 24 im Wesentlichen nach radial außen und die zweite Spannfläche 25 im Wesentlichen nach radial innen orientiert. Wie beim Ausführungsbeispiel der Figuren 1 und 2 besitzen die beiden Spannflächen 24, 25 jedoch einen mit Bezug zur Längsachse 9 des Kontraktionsschlauches 4 geneigten Verlauf.

Die erste Spannfläche 24 ist beim Ausführungsbeispiel der Figur 3 von einer vergleichbar der Fläche einer Kugelzone gestalteten Mantelfläche der ersten Klemmeinheit 22 gebildet. Eine hierzu komplementäre Gestaltung, allerdings mit entgegengesetzter Orientierung, besitzt die am Innenumfang der den Kontraktionsschlauch 4 umschließenden zweiten Klemmeinheit 23 vorgesehene zweite Spannfläche 25. Es ergeben sich daher Verhältnisse vergleichbar der Lagerung an einem Kugelkopf.

Die beiden Spannflächen 24, 25 verfügen über einen Mittenbereich 45, in dem ihr Abstand zur Längsachse 9 des Kontraktionsschlauches 4 ein Maximum hat. Ausgehend hiervon nähern sie sich mit zunehmendem axialem Abstand vom Mittenbereich 45 entsprechend dem gewählten Kugelradius allmählich an die Längsachse 9 an. Ausgehend von dem Mittenbereich 45 verfügen die Spannflächen 24, 25 somit über entgegengesetzt geneigte Verläufe, wobei sich der Durchmesser des Klemmspaltes 26 ausgehend von dem Mittenbereich 45 sowohl nach axial innen hin als auch nach axial außen hin verringert.

Um die gewünschte Basis-Vorspannung zu erhalten, ist die zweite Klemmeinheit 23 mehrteilig aufgebaut. Sie verfügt über zwei axial aufeinanderfolgend angeordnete Klemmkörper 46, 47, und zwar einen axial außerhalb des Mittenbereichs 45 platzierten äußeren Klemmkörper 46 sowie einen axial innerhalb des Mittenbereiches 45 platzierten inneren Klemmkörper 47. Dabei ist ein äußerer Spannflächenabschnitt 48 der zweiten Spannfläche 25 an dem äußeren Klemmkörper 46 und ein innerer Spannflächenabschnitt 49 der zweiten Spannfläche 25 am inneren Klemmkörper 47 vorgesehen. Beiden Klemmkörpern 46, 47 sind Spannmittel 52 zugeordnet, mit denen sich die axiale Relativlage zwischen den beiden Klemmkörpern 46, 47 vorgeben lässt. So können die beiden Klemmkörper 46, 47 durch die beim Ausführungsbeispiel nach Art einer Überwurfmutter ausgeführten Spannmittel 52 axial derart zusammengezogen werden, bis der Kontraktionsschlauch 4 zwischen einerseits den beiden Spannflächenabschnitten 48, 49 und andererseits der ersten Spannfläche 24 im gewünschten Maße eingespannt ist. Ein zwischen den beiden beidseits des Mittenbereiches 45 platzierten Klemmkörpern 46, 47 vorgesehener Zwischenraum sorgt für eine behinderungsfreie Einstellung der Basis-Vorspannung.

Da beim Ausführungsbeispiel der Figur 3 die beiden Klemmeinheiten 22, 23, abgesehen von dem in den Klemmspalt 26 eingreifenden Kontraktionsschlauch 4, keine Verbindung aufweisen, ist wie beim Ausführungsbeispiel der Figuren 1 und 2 eine axiale Beweglichkeit gemäß Doppelpfeil 36 relativ zueinander gewährleistet. Wäre der Kontraktionsschlauch 4 nicht vorhanden, ergäbe sich eine Begrenzung des axialen Bewegungsspiels im Falle der Bauform der Figur 3 durch den Kontakt des äußeren oder inneren Spannflächenabschnittes 48, 49 mit dem zugeordneten Längenabschnitt der ersten Spannfläche 24. Bei der Ausführungsform der Figuren 1 und 2 würde der axiale Bewegungsspielraum in der einen Richtung durch den gegenseitigen Kontakt der beiden Abstützflächen 37, 38 und in der anderen Richtung durch den gegenseitigen Kontakt der beiden Spannflächen 24, 25 begrenzt. In der Praxis erfolgt eine weitere Begrenzung der axialen Beweglichkeit durch die Wandstärke des eingespannten Kontraktionsschlauches 4.

Allen Ausführungsbeispielen ist gemeinsam, dass der Kontraktionsschlauch 4 auf Grund der eingestellten Basis-Vorspannung derart reibschlüssig an der an der zweiten Klemmeinheit 23 vorgesehenen zweiten Spannfläche 25 angreift, dass er bei Aktivierung der Betätigungseinrichtung 1 zumindest einen Teil der Zugkräfte auf die zweite Klemmeinheit 23 überträgt und die zweite Klemmeinheit relativ zu der über die Kraftabgriffsmittel 17 extern fixierten ersten Klemmeinheit 22 im Sinne einer Annährung an das gegenüberliegende Kopfstück verlagert. Die zweite Klemmeinheit 23 wird also mitgezogen. Dies hat zur Folge, dass sich die beiderseitigen Spannflächen 24, 25 entlang zumindest eines Längenabschnittes des Klemmspaltes 26 einander annähern und dabei den Klemmeffekt bezüglich des zwischengefügten Kontraktionsschlauches 4 verstärken.

Beim Ausführungsbeispiel der Figuren 1 und 2 findet dieser zugkraftabhängig auftretende Klemmeffekt auf der gesamten Länge des Klemmspaltes 26 statt. Im Falle der Bauform gemäß Figur 3 beschränkt sich der selbsttätige Klemmeffekt auf den Bereich des äußeren Spannflächenabschnittes 48, da sich der Klemmspalt im Bereich des inneren Spannflächenabschnittes 49 geringfügig erweitert.

In allen Fällen ist jedoch gewährleistet, dass die Spannflächen 24, 25 sehr großflächig auf den Schlauchkörper 5 einwirken, wobei vor allem die axial gemessene Länge des Klemmkontaktes relativ groß ist. Die Kontaktbereiche zeichnen sich insbesondere durch einen im Wesentlichen geradlinigen oder zumindest nur mit großem Radius gekrümmten Verlauf aus, so dass lokale Spannungsspitzen vermieden werden und ein gleichmäßiges Festspannen stattfindet.

Um den Mitnahmeeffekt zwischen dem Kontraktionsschlauch 4 und der zweiten Klemmeinheit 23 zu optimieren, kann die zweite Spannfläche beispielsweise eine feingliedrige Oberflächenstruktur aufweisen, z.B. eine Rillenstruktur oder eine fein verteilte Struktur punktueller Erhebungen und Vertiefungen. Die Struktur kann unmittelbar in das Material der vorzugsweise aus Metall bestehenden Klemmeinheit eingebracht werden, möglich ist aber auch eine Realisierung durch einen geeigneten Materialauftrag, beispielsweise durch Flammspritzen. Derartige Haftungsverbesserungsmaßnahmen erweisen sich im Übrigen auch an der ersten Spannfläche 24 der ersten Klemmeinheit 22 als vorteilhaft.

Die Klemmvorrichtung 18 hat besondere Vorteile bei einem Kontraktionsschlauch des geschilderten Aufbaues mit in das Material des Schlauchkörpers 5 integrierter Strangstruktur. Der Verzicht auf lokal begrenzt wirkende zahn- bzw. vorsprungartige Erhebungen hat den Vorteil, dass die Strangstruktur nicht gequetscht wird und dadurch in ihrer Zugfestigkeit keine Beeinträchtigung erfährt.

Sofern, wie im Falle der Bauform gemäß Figuren 1 und 2, die zwischen den beiden Klemmeinheiten 22, 23 vorgesehenen Bereiche linearer Relativbewegung an Stellen vorgesehen sind, die mit dem Schlauch-Innenraum 13 in Verbindung stehen, werden zweckmäßigerweise geeignete Abdichtmaßnahmen 53 zwischengeschaltet.

Damit der Kontraktionsschlauch 4 die Zugkraft in der gewünschten Weise auf die zweite Klemmeinheit 23 übertragen kann, können außer im Wesentlichen auf Haftschluss basierenden Verbindungsmaßnahmen zusätzlich oder alternativ auch formschlüssige Verbindungsmaßnahmen vorgesehen sein. Es wäre beispielsweise denkbar, den Kontraktionsschlauch 4 an seinen stirnseitigen Randbereichen zusätzlich durch geeignete Maßnahmen fest mit der zweiten Klemmeinheit 23 zu verbinden.

## Patentansprüche

1. Durch Fluidbeaufschlagung aktivierbare Betätigungseinrichtung, mit einem sich zwischen zwei Kopfstücken (2, 3) erstreckenden Kontraktionsschlauch (4), der bei Fluidbeaufschlagung seines Schlauch-Innenraumes (13) im Sinne einer radialen Aufweitung beaufschlagt wird und dabei gleichzeitig im Sinne einer gegenseitigen Annäherung wirkende axiale Zugkräfte auf die Kopfstücke (2, 3) ausübt, wobei der Kontraktionsschlauch (4) an mindestens einem Kopfstück dadurch befestigt ist, dass er mit seinem betreffenden Endabschnitt (10) in einem ringförmigen Klemmspalt (26) eingespannt ist, der zwischen bezüglich der Längsachse (9) des Kontraktionsschlauches (4) zumindest partiell geneigt verlaufenden Spannflächen (24, 25) einer mit zum externen Kraftabgriff dienenden Kraftabgriffsmitteln (17) ausgestatteten ersten Klemmeinheit (22) und einer zweiten Klemmeinheit (23) des Kopfstückes (2, 3) definiert ist, wobei eine der Klemmeinheiten in den Kontraktionsschlauch (4) eingreift und die andere Klemmeinheit den Kontraktionsschlauch (4) außen umgreift, **dadurch gekennzeichnet, dass** die beiden Klemmeinheiten (22, 23) derart in Längsrichtung des Kontraktionsschlauches (4) relativ zueinander beweglich ausgeführt sind und der Kontraktionsschlauch (4) derart an der zweiten Klemmeinheit (23) angreift, dass die zweite Klemmeinheit (23) beim Aktivieren der Betätigungseinrichtung (1) vom Kontraktionsschlauch (4) relativ zu der über die Kraftabgriffsmittel (17) extern fixierten ersten Klemmeinheit (22) mitgezogen werden kann, woraus entlang zumindest eines Längenabschnitts des Klemmspaltes (26) eine den Klemmeffekt unterstützende Verringerung der Breite des Klemmspaltes (26) resultiert.

2. Betätigungseinrichtung nach Anspruch 1, **dadurch gekennzeichnet, dass** die Spannflächen (24, 25) so ausgeführt sind, dass sich der die Breite des Klemmspaltes (26) verringernde Effekt zumindest im Wesentlichen über die gesamte Länge des Klemmspaltes (26) hinweg einstellt.

3. Betätigungseinrichtung nach Anspruch 1 oder 2, **dadurch gekennzeichnet, dass** die an den beiden Klemmeinheiten (22, 23) vorgesehenen Spannflächen (24, 25) eine zueinander komplementäre Gestalt haben.

4. Betätigungseinrichtung nach einem der Ansprüche 1 bis 3, **dadurch gekennzeichnet, dass** die Spannflächen (24, 25) der beiden Klemmeinheiten (22, 23) zumindest partiell und vorzugsweise über ihre gesamte Länge einen konischen Verlauf haben.

5. Betätigungseinrichtung nach einem der Ansprüche 1 bis 4, **dadurch gekennzeichnet, dass** die Spannflächen (24, 25) der beiden Klemmeinheiten (22, 23) zumindest partiell und vorzugsweise über ihre gesamte Länge einen kugelzonenartigen Verlauf haben.

6. Betätigungseinrichtung nach einem der Ansprüche 1 bis 5, **dadurch gekennzeichnet, dass** die Spannflächen (24, 25) innerhalb des Klemmspaltes (26) derart geneigt verlaufen, dass sich ihr Abstand von der Längsachse (9) des Kontraktionsschlauches (4) zu dem dem Kontraktionsschlauch (4) axial entgegengesetzten äußeren Endbereich des Kopfstückes (2, 3) hin vergrößert.

7. Betätigungseinrichtung nach einem der Ansprüche 1 bis 6, **dadurch gekennzeichnet, dass** die Spannflächen (24, 25) innerhalb des Klemmspaltes (26) derart geneigt verlaufen, dass sich ihr Abstand von der Längsachse (9) des Kontraktionsschlauches (4) zu dem dem Kontraktionsschlauch (4) axial entgegengesetzten äußeren Endbereich des Kopfstückes (2, 3) hin verringert.

8. Betätigungseinrichtung nach einem der Ansprüche 1 bis 7, **dadurch gekennzeichnet, dass** die Spannflächen (24, 25) innerhalb des Klemmspaltes (26) derart geneigt verlaufen, dass sie einen Mittenbereich (45) größten Abstandes zur Längsachse (9) des Kontraktionsschlauches (4) aufweisen, von dem aus sie sich zu entgegengesetzten Axialseiten hin an die Längsachse (9) des Kontraktionsschlauches (4) annähern.

9. Betätigungseinrichtung nach Anspruch 8, **dadurch gekennzeichnet, dass** die den Kontraktionsschlauch außen umgreifende Klemmeinheit zwei beidseits des Mittenbereiches (45) platzierte Klemmkörper (46, 47) aufweist, denen Spannmittel (52) zum gegenseitigen axialen Verspannen zugeordnet sind.

10. Betätigungseinrichtung nach einem der Ansprüche 1 bis 9, **dadurch gekennzeichnet, dass** zumindest die Spannfläche der zweiten Klemmeinheit (23) und insbesondere beide Spannflächen (24, 25) eine feingliedrige Oberflächenstruktur aufweisen, beispielsweise in Gestalt einer feinen Rillenstruktur oder einer Struktur aus fein verteilten Erhebungen und/oder Vertiefungen.

11. Betätigungseinrichtung nach einem der Ansprüche 1 bis 10, **gekennzeichnet durch** einen im Wesentlichen geradlinigen oder zumindest nur mit großem Radius gekrümmten Längsverlauf der Spannflächen (24, 25).

12. Betätigungseinrichtung nach einem der Ansprüche 1 bis 11, **dadurch gekennzeichnet, dass** die mit den Kraftübertragungsmitteln (17) versehene Klemmeinheit (22, 23) den Kontraktionsschlauch (4) außen umgreift.

13. Betätigungseinrichtung nach einem der Ansprüche 1 bis 11, **dadurch gekennzeichnet, dass** die mit den Kraftabgriffsmitteln (17) versehene Klemmeinheit (22, 23) in den Kontraktionsschlauch (4) eingreift.

14. Betätigungseinrichtung nach einem der Ansprüche 1 bis 13, **dadurch gekennzeichnet, dass** die beiden Kopfstücke (2, 3) zumindest hinsichtlich der Ausgestaltung der Klemmeinheiten (22, 23) identisch ausgebildet sind.

15. Betätigungseinrichtung nach einem der Ansprüche 1 bis 14, **dadurch gekennzeichnet, dass** Spannmittel (44, 52) vorhanden sind, die dazu dienen, die beiden Klemmeinheiten (22, 23) zum Erhalt einer Basis-Vorspannung des Kontraktionsschlauches (4) unabhängig vom Fluidbeaufschlagungszustand des Schlauch-Innenraumes (13) miteinander zu verspannen.

16. Betätigungseinrichtung nach einem der Ansprüche 1 bis 15, **dadurch gekennzeichnet, dass** der Kontraktionsschlauch (4) einen aus Material mit gummielastischen Eigenschaften bestehenden Schlauchkörper (5) und eine koaxial zu dem Schlauchkörper (5) angeordnete Strangstruktur aufweist, wobei die Strangstruktur zweckmäßigerweise in das Material des Schlauchkörpers (5) eingebettet ist.
